# EUROPEAN PATENT APPLICATION

(11) **EP 3 352 241 A1**
(43) Date of publication of application: **25.07.2018**
(21) Application number: 18151599.0
(22) Date of filing: 15.01.2018
(51) Int. Cl.: H01M 2/02, H01M 2/30, H01M 2/20, H01M 10/052

(54) **BATTERY CELL AND ASSEMBLED BATTERY**

(30) Priority: 20.01.2017 JP 2017008479
(71) Applicant: KABUSHIKI KAISHA TOSHIBA, Minato-ku Tokyo 105-8001 (JP); Toshiba Infrastructure Systems & Solutions Corporation, Kawasaki-shi, Kanagawa 212-0013 (JP)
(72) Inventor: ENOMOTO, Takashi, Tokyo, 105-8001 (JP); HOSHINO, Mitsuhiro, Tokyo, 105-8001 (JP); KAWAMURA, Koichi, Tokyo, 105-8001 (JP); SHUDO, Tadashi, Tokyo, 105-8001 (JP); WADA, Satoshi, Tokyo, 105-8001 (JP)
(74) Representative: Hoffmann Eitle

(57) **Abstract**

A battery cell comprises a chassis having a first end side and a second end side. A first electrode terminal is exposed on the first end side of the chassis. A second electrode terminal is exposed on the second end side of the chassis . And a third electrode terminal is exposed on the first end side. The first electrode terminal and the third electrode terminal have a same polarity. The first electrode terminal and the second electrode terminal have an opposite polarity.

## Description

### FIELD

Embodiments described herein relate generally to a battery cell and an assembled battery.

### BACKGROUND

An assembled battery including a plurality of battery cells electrically interconnected by a conductive member is known.

### DESCRIPTION OF THE DRAWINGS

Fig. 1 is a schematic perspective view of a battery cell according to a first embodiment.
Fig. 2 is a schematic plan view of the battery cell according to the first embodiment.
Fig. 3 is a schematic bottom view of the battery cell according to the first embodiment.
Fig. 4 is a cross-sectional view taken along arrow IV in Fig. 2.
Fig. 5 is a cross-sectional view taken along arrow V in Fig. 2.
Fig. 6 is a cross-sectional view taken along arrow VI in Fig. 2.
Fig. 7 is a cross-sectional view taken along arrow VII in Fig. 2.
Fig. 8 is a schematic sectional view of a part of the battery cell according to the first embodiment.
Fig. 9 is a schematic plan view of an assembled battery according to the first embodiment.
Fig. 10 a schematic perspective view of the assembled battery according to the first embodiment.
Fig. 11 is a schematic perspective view of the assembled battery according to the first embodiment.
Fig. 12 is a schematic plan view of another assembled battery according to the first embodiment.
Fig. 13 is a schematic perspective view of a battery cell according to a second embodiment.
Fig. 14 is another schematic perspective view of the battery cell according to the second embodiment.
Fig. 15 is a schematic perspective view of an assembled battery according to the second embodiment.
Fig. 16 is a schematic perspective view of another assembled battery according to the second embodiment.
Fig. 17 is a schematic perspective view of a battery cell according to a third embodiment.
Fig. 18 is a schematic plan view of the battery cell according to the third embodiment.
Fig. 19 is a cross-sectional view taken along arrow XIX in Fig. 18.
Fig. 20 is a cross-sectional view taken along arrow XX in Fig. 18.
Fig. 21 is a cross-sectional view taken along arrow XXI in Fig. 18.
Fig. 22 is a schematic sectional view of the battery cell according to the third embodiment.
Fig. 23 is a schematic perspective view of an assembled battery according to the third embodiment.
Fig. 24 is a schematic perspective view of a supporting member of the assembled battery according to the third embodiment.
Fig. 25 is a schematic perspective view of the assembled battery according to the third embodiment during a manufacturing process.
Fig. 26 is a cross-sectional view taken along arrow XXVI in Fig. 25.
Fig. 27 is a cross-sectional view taken along arrow XXVII in Fig. 25.
Fig. 28 is another schematic perspective view of the assembled battery according to the third embodiment.

### DETAILED DESCRIPTION

An exemplary embodiment provides an assembled battery including a battery cell having a large degree of freedom in installation orientation and connection configuration.

In general, according to one embodiment, a battery cell includes a chassis having a first end side and a second end side. A first electrode terminal is exposed on the first end side of the chassis. A second electrode terminal is exposed on the second end side of the chassis. A third electrode terminal is exposed on the first end side. The first electrode terminal and the third electrode terminal have a same polarity and the first electrode terminal and the second electrode terminal have an opposite polarity.

Hereinafter, example and schematic embodiments of the present disclosure will be described by reference to the drawings. Example configurations described below and the actions and results (advantageous effects) brought about by the configurations are provided for purposes of explanation and are not limiting of the scope of the present disclosure. The embodiments of present disclosure can be implemented by other than the configurations disclosed in the following examples. Furthermore, each of the various advantageous effects (also including derivative effects) brought about in or by the example configurations need not be provided in or by all possible embodiments of the present disclosure.

In the example embodiments described below substantially similar elements are assigned the same reference characters in figures and associated description, and description of repeated elements in different embodiments may be omitted.

### <First Embodiment>

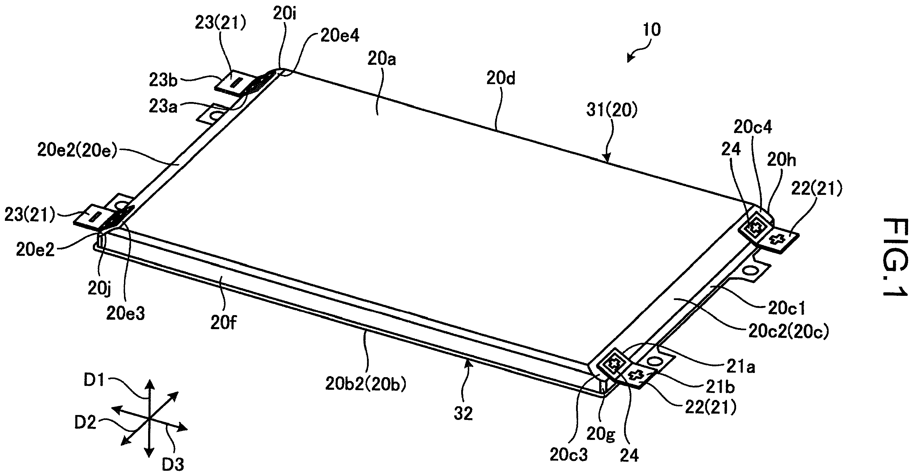

A battery cell 10 illustrated in Fig. 1 is configured with, for example, a lithium-ion secondary battery. The lithium-ion secondary battery is a type of non-aqueous electrolyte secondary battery, in which ions in an electrolyte provide electrical conduction.

Examples of the positive-electrode material to be used include lithium-manganese composite oxide, lithium-nickel composite oxide, lithium-cobalt composite oxide, lithium-nickel-cobalt composite oxide, lithium-manganese-cobalt composite oxide, spinel-type lithium-manganese-nickel composite oxide, and lithium phosphate oxide having an olivine structure.

Examples of the negative-electrode material to be used include an oxide-based material, such as lithium titanate (LTO), and an oxide material, such as niobium composite oxide.

Examples of the electrolyte (for example, electrolytic solution) to be used include organic solvents, such as ethylene carbonate, propylene carbonate, diethyl carbonate, ethyl methyl carbonate, and dimethyl carbonate, containing a composition of lithium salt, such as fluorine-series complex salt (for example, lithium tetrafluoroborate (LiBF₄) or lithium hexafluorophosphate (LiPF₆)), which can be used singly or in a mixture of two types or more. Each battery cell 10 can also be referred to as a "single battery". Furthermore, the battery cell 10 can be another type of secondary battery, such as a nickel-hydrogen battery or a nickel-cadmium battery.

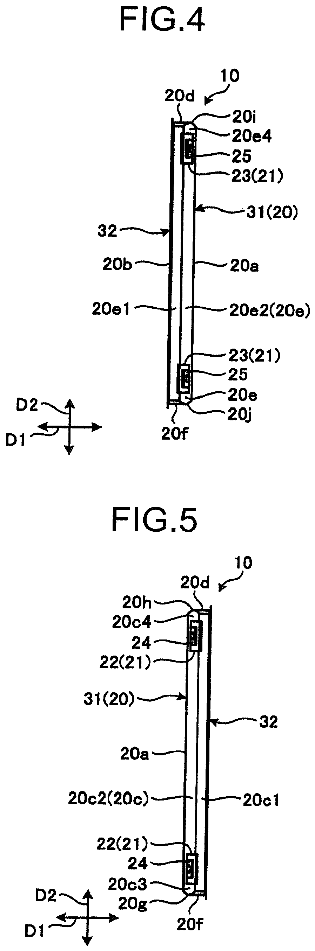

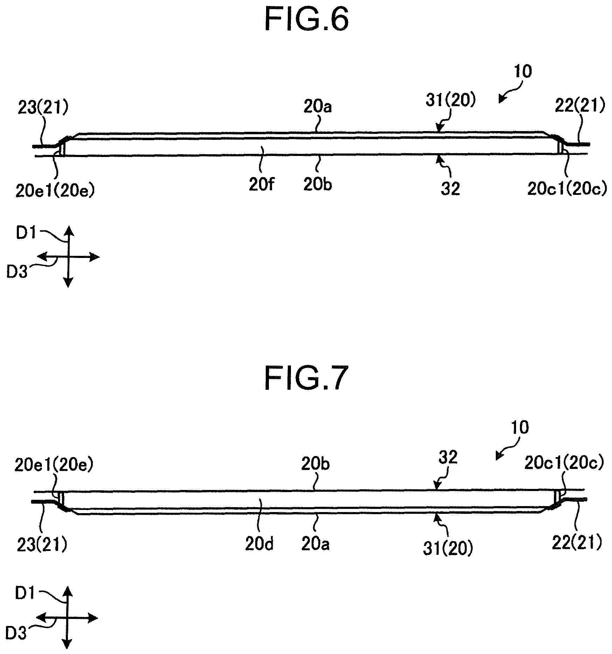

As illustrated in Fig. 1 to Fig. 7, the battery cell 10 includes a chassis 20 and a plurality of terminals 21. The plurality of terminals 21 includes at least two positive-electrode terminals 22 and at least two negative-electrode terminals 23. In other words, the positive-electrode terminals 22 and the negative-electrode terminals 23 form a plurality of terminals 21 of the battery cell 10. The terminals 21 can also be referred to as an "electrode terminal."

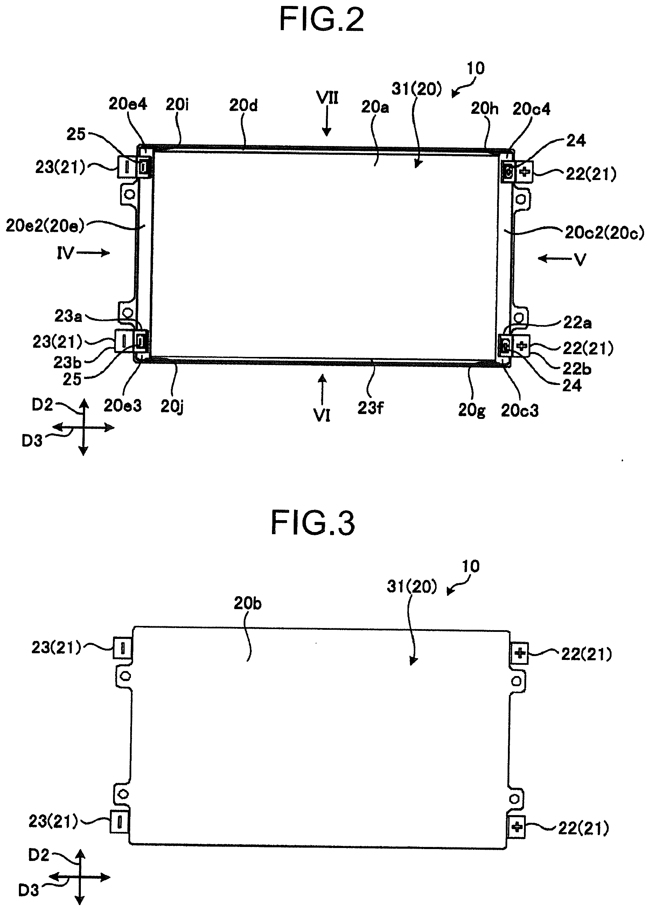

An electrode body and an electrolytic solution are accommodated inside the chassis 20. The electrode body includes, for example, a positive-electrode sheet, a negative-electrode sheet, and an insulating layer (separator). The electrode body can be formed in a flattened, planar shape by winding the positive-electrode sheet, the negative-electrode sheet, and the insulating layer. The electrode body is an electrode group and functions as a power generation element. Furthermore, as illustrated in Fig. 2, each positive-electrode terminal 22 is electrically connected to the positive-electrode sheet of the electrode body via a positive-electrode conductive member 24, and each negative-electrode terminal 23 is electrically connected to the negative-electrode sheet of the electrode body via a negative-electrode conductive member 25. The positive-electrode conductive member 24 and the negative-electrode conductive member 25 each penetrate through the chassis 20. An insulator or a seal member is provided between the positive-electrode conductive member 24 the chassis 20 and the negative-electrode conductive member 25 and the chassis 20. The positive-electrode conductive member 24 or the negative-electrode conductive member 25 can also each be referred to as a "conductive member" or an "electrode portion".

As illustrated in Fig. 1 to Fig. 7, the chassis 20 is configured in a flattened rectangular parallelepiped shape. More specifically, the chassis 20 is configured in a shape having a thickness direction D1, a lateral direction D2, and a longitudinal direction D3. The thickness direction D1, the lateral direction D2, and the longitudinal direction D3 are perpendicular to each other. The thickness direction D1 can also be referred to as a "height direction", the lateral direction D2 can also be referred to as a "first width direction", and the longitudinal direction D3 can also be referred to as a "second width direction."

The chassis 20 includes wall portions 20a to 20f. The wall portion 20a and the wall portion 20b each extend along directions perpendicular to the thickness direction D1, (that is, in the lateral direction D2 and the longitudinal direction D3), and are provided approximately in parallel with each other with an interval there between in the thickness direction D1. One of the wall portion 20a and the wall portion 20b can also be referred to as, for example, a "bottom wall portion" or "lower wall portion", and the other thereof can also be referred to as, for example, a "top wall portion" or "upper wall portion".

The wall portions 20c to 20f are situated at the peripheral edge portions of the wall portion 20a and extend between the wall portion 20a and the wall portion 20b. The wall portion 20c and the wall portion 20e each extend along the lateral direction D2, and are provided approximately in parallel with each other at an interval therebetween in the longitudinal direction D3. The wall portion 20d and the wall portion 20f each extend along the longitudinal direction D3, and are provided approximately in parallel with each other at an interval therebetween in the lateral direction D2. Each of the wall portions 20c to 20f can also be referred to as a "side wall portion". Furthermore, the wall portions 20c and 20e are examples of a short-side side wall portion, and the wall portions 20d and 20f are examples of a long-side side wall portion. Additionally, the wall portion 20c is an example of a first wall portion, and the wall portion 20e is an example of a second wall portion.

Furthermore, the wall portions 20c and 20e respectively include base portions 20c1 and 20e1 and slanted portions 20c2 and 20e2. The base portions 20c1 and 20e1 are each connected to an end portion of the wall portion 20b in the longitudinal direction D3 and each extend along the lateral direction D2. The base portions 20c1 and 20e1 are approximately perpendicular to the wall portion 20b. Moreover, the slanted portions 20c2 and 20e2 extend to the respective end portions of the wall portion 20a in the longitudinal direction D3 and to the respective end portions of the base portions 20c1 and 20e1 opposite to the wall portion 20b. The slanted portions 20c2 and 20e2 are slanted in such a way as to gradually approach the wall portion 20b from the respective end portions on the side of the wall portion 20a toward the respective end portions on the side opposite to the wall portion 20a.

Moreover, the chassis 20 has four corner portions 20g to 20j. The corner portion 20g is an intersection portion (connection portion) between the wall portion 20f and the wall portion 20c. The corner portion 20h is an intersection portion between the wall portion 20c and the wall portion 20d. The corner portion 20i is an intersection portion between the wall portion 20d and the wall portion 20e. The corner portion 20j is an intersection portion between the wall portion 20e and the wall portion 20f.

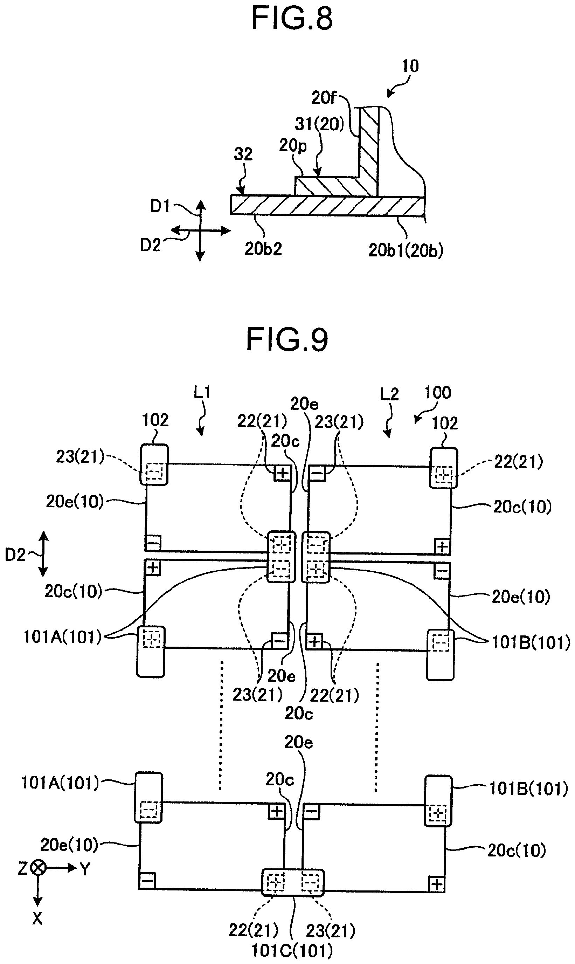

Additionally, as illustrated in Fig. 8, the wall portion 20b includes a base portion 20b1 and a flange portion 20b2. The base portion 20b1 is configured in a rectangular plate-like shape along the wall portions 20c to 20f, and covers an opening of the wall portions 20c to 20f opposite to the wall portion 20a. The flange portion 20b2 projects from the base portion 20b1 toward the outside of the chassis 20. The flange portion 20b2 can also be referred to as a "projecting portion" or "protruding portion" in some contexts.

Furthermore, a flange portion 20p projecting toward the outside of the chassis 20 along the flange portion 20b2 is provided at the respective end portions of the wall portions 20c to 20f on the side opposite to the wall portion 20a, i.e., on the side of the wall portion 20b. The flange portion 20p and the flange portion 20b2 are joined (coupled) to each other by, for example, resistance seam welding. The resistance seam welding has advantages in improving air tightness and heat resistance and is generally lower costing as compared with laser welding. The flange portion 20p can also be referred to as a "projecting portion" or "protruding portion" in some contexts.

As illustrated in Fig. 1 and Fig. 8, the chassis 20 comprises a plurality of members (components) in combination. More specifically, the chassis 20 includes, for example, a first chassis member 31 and a second chassis member 32. The first chassis member 31 maybe for example a case component, and the second chassis member 32 maybe be another case component, such as a lid, a cover, or other matching case component. The first chassis member 31 at least includes the wall portions 20a and 20c to 20f and the flange portion 20p. Furthermore, the second chassis member 32 at least includes the wall portion 20b. The first chassis member 31 is configured in a rectangular parallelepiped-like box shape with one end side open. The second chassis member 32 is configured in an approximate rectangular plate-like shape longer along the longitudinal direction D3 of the chassis 20. The second chassis member 32 covers the open portion of the first chassis member 31 and can be integrated with the first chassis member 31 by, for example, resistance seam welding. Each of the first chassis member 31 and the second chassis member 32 is made from, for example, stainless steel.

As illustrated in, for example, Fig. 1 and Fig. 2, the two positive-electrode terminals 22 are provided at the wall portion 20c extending on the outside of the chassis 20. In other words, the two positive-electrode terminals 22 are exposed outside the chassis 20. Each positive-electrode terminal 22 is joined to the positive-electrode conductive member 24 by, for example, welding, and is supported by the wall portion 20c via the positive-electrode conductive member 24. The two positive-electrode terminals 22 are spaced from each other in the lateral direction D2 of the chassis 20. A positive-electrode terminal 22 is provided at each of the two end portions 20c3 and 20c4 in the lateral direction D2 of the wall portion 20c. In particular, one positive-electrode terminal 22 is provided at the end portion 20c3 near the corner portion 20g of the chassis 20 and another positive-electrode terminal 22 is provided at the end portion 20c4 near the corner portion 20h of the chassis 20.

The positive-electrode terminals 22 include a base portion 22a and a terminal portion 22b, and are configured in a plate-like shape. The base portion 22a is configured in a plate-like shape along the slanted portion 20c2 of the wall portion 20c and is joined to the positive-electrode conductive member 24 by, for example, welding. The terminal portion 22b extends from the base portion 22a to the outside of the chassis 20 in the longitudinal direction D3. The terminal portion 22b is configured in a plate-like shape along the lateral direction D2 and the longitudinal direction D3.

The two negative-electrode terminals 23 are provided at the wall portion 20e extending on the outside the chassis 20. In other words, the two negative-electrode terminals 23 are exposed outside the chassis 20. Each negative-electrode terminal 23 is joined to the negative-electrode conductive member 25 by, for example, welding, and is supported by the wall portion 20e via the negative-electrode conductive member 25. The two negative-electrode terminals 23 are spaced from each other in the lateral direction D2 of the chassis 20. The negative-electrode terminals 23 are provided at the two end portions 20e3 and 20e4 in the lateral direction D2. The two negative-electrode terminals 23 are spaced from the two positive-electrode terminals 22 in the longitudinal direction D3 of the chassis 20. Furthermore, the negative-electrode terminal 23 provided at the end portion 20e3 is located near the corner portion 20j of the chassis 20, and the negative-electrode terminal 23 provided at the end portion 20e4 is located near the corner portion 20i of the chassis 20.

The negative-electrode terminals 23 include a base portion 23a and a terminal portion 23b and are configured in a plate-like shape. The base portion 23a is configured in a plate-like shape along the slanted portion 20e2 of the wall portion 20e and is joined to the negative-electrode conductive member 25 by, for example, welding. The terminal portion 23b extends from the base portion 23a to the outside of the chassis 20 in the longitudinal direction D3. The terminal portion 23b is configured in a plate-like shape along the lateral direction D2 and the longitudinal direction D3.

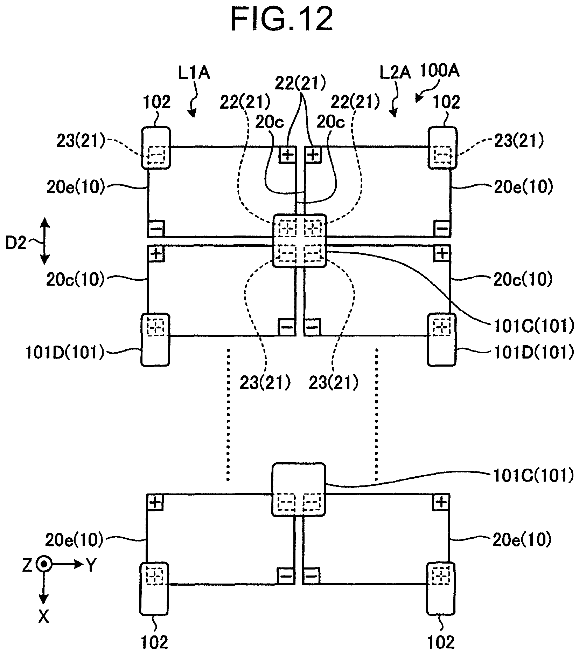

Next, assembled batteries 100 and 100A, each of which includes a plurality of battery cells 10 electrically connected to each other, are described with reference to Fig. 9 to Fig. 12. In Fig. 9 and Fig. 12, each battery cell 10 is illustrated in an outline manner. Moreover, in Fig. 9 to Fig. 12, the X direction, Y direction, and Z direction are defined for sake explanatory convenience. The X direction, Y direction, and Z direction are perpendicular to one another. Here, the X direction is a direction along the vertical direction of an installation location in to which the assembled battery 100 or 100A can be installed. However, the X direction can be along another direction of an installation location.

The assembled battery 100 or 100A can be installed in an installation target, such as various apparatuses, machines, and facilities, and then used as power sources for these various apparatuses, machines, and facilities. For example, the assembled battery 100 or 100A can be used as a mobile power source, such as power sources for automobiles, bicycles, or other mobile objects, or can also be used as a stationary power source, such as a power source for a point of sales (POS) system or terminal. Furthermore, a plurality of assembled batteries 100 or 100A can be provided in series or in parallel in the various apparatuses or facilities. The assembled battery 100 or 100A can also be referred to as a "battery module" or "battery unit" in some embodiments. The number and/or location of battery cells 10 in each assembled battery 100 or 100A may be varied from that disclosed in the present example embodiments. Additionally, the assembled battery 100 or 100A can contain, for example, wiring for monitoring the voltage and/or temperature of each battery cell 10, a monitoring circuit board, and a control circuit board for battery control.

As illustrated in Fig. 9, the assembled battery 100 includes a plurality of battery cells 10, a conductive member 101, and an output conductive member 102. The plurality of battery cells 10 is electrically interconnected by a plurality of conductive members 101. In the assembled battery 100, the plurality of battery cells 10 is connected in series by the plurality of conductive members 101. The output conductive member 102 functions as an external connection terminal of the assembled battery 100. Furthermore, when particular conductive members in plurality of conductive members 101 are described, these conductive members 101 may be referred to as, for example, "conductive member 101A" and conductive member 101B" according to position. The conductive member 101 can also be referred to as a "bus bar" in some instances.

A plurality of battery cells 10 is arranged in two columns (column L1 and column L2) . Each of the columns L1 and L2 extends along the X direction. The columns L1 and L2 are arranged side by side in the Y direction intersecting with the X direction. The X direction is an example of a third direction, and the Y direction is an example of a fourth direction.

In each of the columns L1 and L2, a plurality of battery cells 10 is arranged adjacent in the X direction in an orientation in which the lateral direction D2 of the individual battery cells is aligned with the X direction. Furthermore, two battery cells 10 adjacent in the X direction to each other are in an orientation in which the positive-electrode terminal 22 and the negative-electrode terminal 23 of one of the two battery cells 10 are in an opposite positional relationship to the positive-electrode terminal 22 and the negative-electrode terminal 23 of the other of the two battery cells 10. Moreover, each two battery cells 10 adjacent in the Y direction to each other are arranged in an orientation in which the positive-electrode terminal 22 and the negative-electrode terminal 23 of one of the two battery cells 10 correspond in position (along the X direction) to the positive-electrode terminal 22 and the negative-electrode terminal 23 of the other of the two battery cells 10.

The conductive member 101 electrically interconnects certain adjacent terminals 21 (e.g., positive-electrode terminal 22/negative-electrode terminal 23) of each of the adjacent battery cells 10 to a terminal 21 (e.g., negative-electrode terminal 23/positive-electrode terminal 22) of another one of the adjacent battery cells 10.

For example, a conductive member 101A provided in the column L1 electrically interconnects the positive-electrode terminal 22 of a battery cell 10 located on the upper X direction side (the upper page side in Fig. 9) of two adjacent battery cells 10 in the column L1 and the negative-electrode terminal 23 of a battery cell 10 located on the lower X direction side (the lower page direction in Fig. 9) of the two adjacent battery cells 10.

A conductive member 101B electrically interconnects the negative-electrode terminal 23 of a battery cell 10 located on the upper X direction side (the upper side in Fig. 9) of two adjacent battery cells 10 in the column L2 and the positive-electrode terminal 22 of a battery cell 10 located on the lower X direction side (the lower page side in Fig. 9) of the two adjacent battery cells 10.

A conductive member 101C extends between the a battery cell 10 in column L1 and a battery cell 10 in the column L2 and electrically interconnects the positive-electrode terminal 22 of a battery cell 10 located at the lower end portion in the X direction in the column L1 and the negative-electrode terminal 23 of a battery cell 10 located at the lower end portion in the X direction in the column L2.

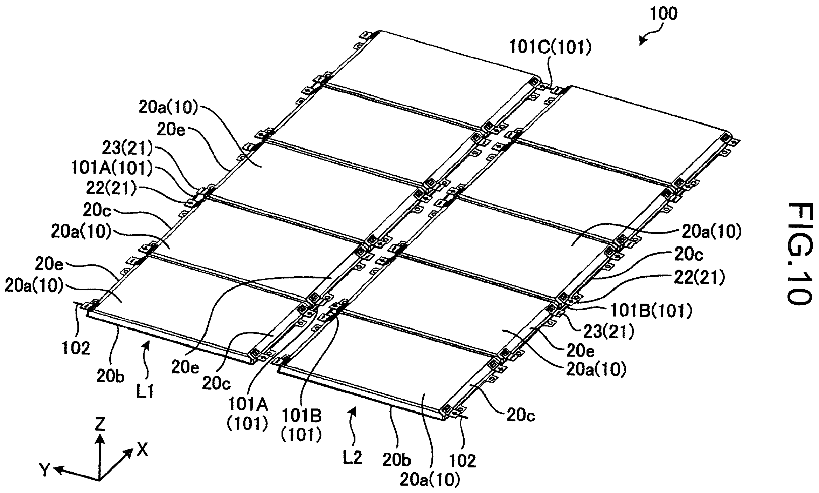

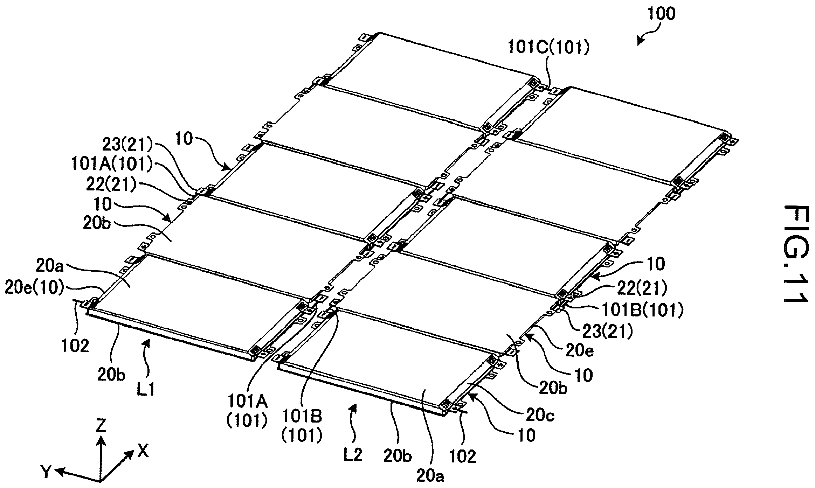

In this assembled battery 100, the orientations of the plurality of battery cells 10 with respect to the thickness direction D1 (installation orientation) can be equal to each other or can be different from each other in part. Fig. 10 illustrates an example in which the orientations of the plurality of battery cells 10 with respect to the thickness direction D1 (installation orientation) are equal to each other. In the example illustrated in Fig. 10, the battery cells 10 are arranged side by side in an orientation in which the wall portion 20a is located on the Z direction side of the wall portion 20b. Moreover, Fig. 11 illustrates an example in which the orientations of two battery cells 10 adjacent in the X direction with respect to the thickness direction D1 (installation orientation) are opposite to each other. More specifically, in the example illustrated in Fig. 11, one of the two battery cells 10 adjacent in the X direction is arranged side by side in an orientation in which the wall portion 20a is located on the Z direction side of the wall portion 20b, and the other of the two battery cells 10 adjacent in the X direction is arranged side by side in an orientation in which the wall portion 20b is located on the Z direction side of the wall portion 20a. Furthermore, in Fig. 10 and Fig. 11, the conductive member 101 and the output conductive member 102 are illustrated in an outline manner.

An assembled battery 100A illustrated in Fig. 12 includes a plurality of battery cells 10, a conductive member 101, and an output conductive member 102, as with the assembled battery 100, and the plurality of battery cells 10 is arranged side by side in two columns L1A and L2A. Furthermore, as with the assembled battery 100, in each of the columns L1A and L2A, a plurality of battery cells 10 is arranged side by side in the X direction in an orientation in which the lateral direction D2 is aligned with the X direction. Furthermore, two battery cells 10 adjacent in the X direction are arranged side by side in an orientation in which the positive-electrode terminal 22 and the negative-electrode terminal 23 of one of the two battery cells 10 are in an opposed positional relationship with the and the negative-electrode terminal 23 and the positive-electrode terminal 22 of the other of the two battery cells 10.

However, in the assembled battery 100A, two battery cells 10 adjacent to each other in the Y direction are in an orientation in which the positive-electrode terminal 22 and the negative-electrode terminal 23 of one of the two battery cells 10 are in opposed positional relationship to the positive-electrode terminal 22 and the negative-electrode terminal 23 of the other of the two adjacent battery cells 10. Then, the plurality of battery cells 10 is interconnected in a combination of series and parallel connection by a plurality of conductive members 101 (referred to as conductive members 101C and 101D).

The conductive member 101C interconnects four battery cells 10 in series and parallel. More specifically, the conductive member 101C electrically interconnects the positive-electrode terminal 22 of a battery cell 10 located on the X direction side (the upper side in Fig. 12) of two battery cells 10 adjacent in the X direction in each of the columns L1A and L2A and the negative-electrode terminal 23 of a battery cell 10 located on the side (the lower side in Fig. 12) opposite to the X direction side of the two battery cells 10. Furthermore, the conductive member 101C electrically interconnects two matching terminals adjacent to each other in the Y direction (e.g., a positive-electrode terminal 22 of one of the two adjacent battery cells 10 to a positive-electrode terminal 22 of the other of the two adjacent battery cells 10 and a negative-electrode terminal 23 of one of the two adjacent battery cells 10 to a negative-electrode terminal 23 of the other of the two adjacent battery cells 10) . In other words, the conductive member 101C electrically interconnects two terminals 21 of the same electrode polarity on the two battery cells 10 adjacent to each other in the Y direction. A conductive member 101D interconnects, in series, two battery cells 10 adjacent to each other in the X direction in each of the columns L1A and L2A.

In the assembled battery 100A, the orientations of the plurality of battery cells 10 with respect to the thickness direction D1 (mounting orientation) can be equal to each other or can be different from each other in part.

As described above, the battery cell 10 includes the chassis 20, the positive-electrode terminal 22 (which is exposed outside the chassis 20), and the negative-electrode terminal 23 (which is exposed outside the chassis 20), and at least one of the positive-electrode terminal 22 and the negative-electrode terminal 23 is provided in plurality (multiple pieces or portions or instances of the terminal on the same battery cell 10). Therefore, the battery cell 10 is able to be installed in any one of a plurality of possible orientations, for example those illustrated in Fig. 10 and Fig. 11. Thus, the battery cell 10 provides advantages in having a large degree of freedom with respect to possible installation orientation. Therefore, even in a case where a constraint (e.g., a dimensional constraint) in installing the battery cell 10 in an installation target, such as a battery board, is large, the installation of the battery cell 10 can still be relatively easily performed. Moreover, since there is a large degree of freedom of installation orientation of the battery cell 10, this enables installation of a plurality of battery cells 10 in such a way as to shorten a distance between two terminals 21 connected by the conductive member 101, the conductive member 101 can be made shorter. Therefore, any increase in heat generation that may be attendant to a lengthening of the conductive member 101 can be prevented or reduced, and an improvement in structural reliability and a reduction in cost of the conductive member 101 can also be attained.

In this example, the conductive member 101 is connected to one positive-electrode terminal 22 or one negative-electrode terminal 23 of a battery cell 10 has been illustrated; however, the present disclosure is not limited only to this arrangement. For example, the conductive member 101 can be connected to a plurality of positive-electrode terminals 22 or a plurality of negative-electrode terminals 23 of a battery cell 10. In this way, a battery cell 10 can be connected to the conductive member 101 in any one of a plurality of potential connection configurations. Thus, the battery cell 10 of the present embodiment has advantages in providing a large degree of freedom with respect to possible connection configurations or arrangements of battery cells 10.

Furthermore, in the battery cell 10 in the present example, two positive-electrode terminals 22 are provided spaced from each other in the lateral direction D2 of the chassis 20. Likewise, two negative-electrode terminals 23 are provided spaced from each other in the lateral direction D2 of the chassis 20, and are spaced from the plurality of positive-electrode terminals 22 in the longitudinal direction D3 (a second direction) of the chassis 20, which intersects with the lateral direction D2. Therefore, according to the present example, the battery cell 10 can be installed in any of two possible orientations opposite to each other with respect to the thickness direction D1 of the battery cell 10.

Moreover, in the battery cell 10 in the present example, the chassis 20 includes wall portion 20c, which extends in the lateral direction D2, and wall portion 20e), which extends in the lateral direction D2 and is spaced from the wall portion 20c in the longitudinal direction D3. Additionally, the positive-electrode terminal 22 is provided at one of the wall portion 20c or the wall portion 20e (for example, the wall portion 20c). The negative-electrode terminal 23 is provided at the other of the wall portion 20c or the wall portion 20e (for example, the wall portion 20e). Therefore, according to the present example, it is easy to arrange a plurality of battery cells 10 in line with each other. Furthermore, a positive-electrode terminal 22 can be provided at the wall portion 20e, and a negative-electrode terminal 23 can be provided at the wall portion 20c.

Furthermore, in the battery cell 10, the positive-electrode terminal 22 can be provided at either of the end the portions 20c3 and 20c4 in the lateral direction D2 of one of the wall portion 20c and the wall portion 20e (for example, the wall portion 20c). The negative-electrode terminal 23 can be provided at either of the end portions 20e3 and 20e4 in the lateral direction D2 of the other of the wall portion 20c and the wall portion 20e (for example, the wall portion 20e). Therefore, it is easy to shorten the lengths of the conductive members 101A and 101B as compared with a configuration in which, for example, only a single positive-electrode terminal 22 is provided at the middle portion in the lateral direction D2 of the wall portion 20c and only a single negative-electrode terminal 23 is provided at the middle portion in the lateral direction D2 of the wall portion 20e.

Each of the assembled batteries 100 and 100A includes a plurality of battery cells 10 and a conductive member 101. The positive-electrode terminal 22 and the negative-electrode terminal 23 of a battery cell 10, which are referred to collectively as terminals 21 of the battery cell 10. The conductive member 101 electrically interconnects two adjacent terminals 21 of two adjacent battery cells 10. Therefore, according to the present embodiment, it is possible to shorten the length of the conductive member 101.

### <Second Embodiment>

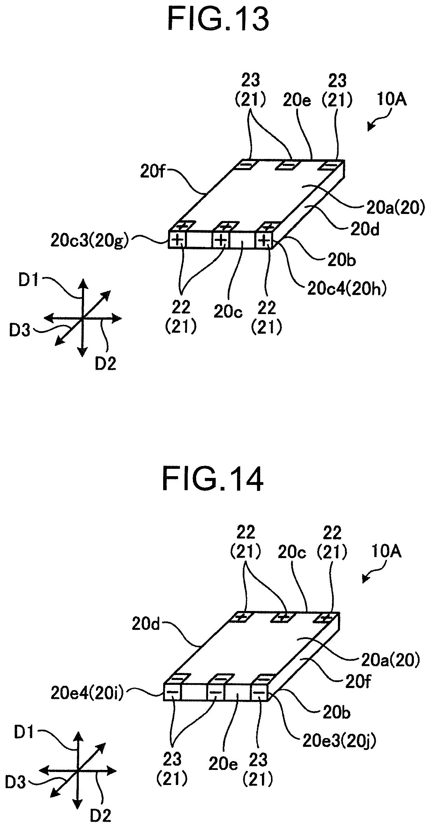

Next, a second embodiment is described with reference to Fig. 13 to Fig. 16. A battery cell 10A and assembled batteries 100B and 100C in the second embodiment have respective similar configurations to those of the battery cell 10 and assembled batteries 100 and 100A in the first embodiment. Therefore, the second embodiment can also acquire similar advantageous effects as the first embodiment. Furthermore, in Fig. 13 to Fig. 16, the battery cell 10A is illustrated in an outline manner.

However, in the second embodiment, as illustrated in Fig. 13 and Fig. 14, the battery cell 10A includes three positive-electrode terminals 22 and three negative-electrode terminals 23. Furthermore, the battery cell 10A can also include four or more positive-electrode terminals 22 and four or more negative-electrode terminals 23 in some examples.

As illustrated in Fig. 13, the three positive-electrode terminals 22 are provided at the wall portion 20c in a line and are supported at the wall portion 20c via the positive-electrode conductive members 24 (see Fig. 1). Two of the three positive-electrode terminals 22 are provided at both end portions 20c3 and 20c4 in the lateral direction D2 of the wall portion 20c as in the first embodiment. The remaining one of the three positive-electrode terminals 22 is provided between the two positive-electrode terminals 22 provided at the both end portions 20c3 and 20c4. The remaining positive-electrode terminal 22 is different in this example from the two positive-electrode terminals 22 provided at end portions 20c3 and 20c4. Also, more than one of these positive-electrode terminals 22 can be provided between the two positive-electrode terminals 22 at the end portions 20c3 and 20c4.

As illustrated in Fig. 14, the three negative-electrode terminals 23 are provided at the wall portion 20e in a line and are supported at the wall portion 20e via the negative-electrode conductive members 25 (see Fig. 1). Two of the three negative-electrode terminals 23 are provided at both end portions 20e3 and 20e4 in the lateral direction D2 of the wall portion 20e as in the first embodiment. The remaining one of the three negative-electrode terminals 23 is provided between the two negative-electrode terminals 23 at the end portions 20e3 and 20e4. The remaining negative-electrode terminal 23 is different from the two negative-electrode terminals 23 provided at the end portions 20e3 and 20e4. Furthermore, more than one of these different negative-electrode terminals 23 can be provided between the two negative-electrode terminals 23 provided at the end portions 20e3 and 20e4.

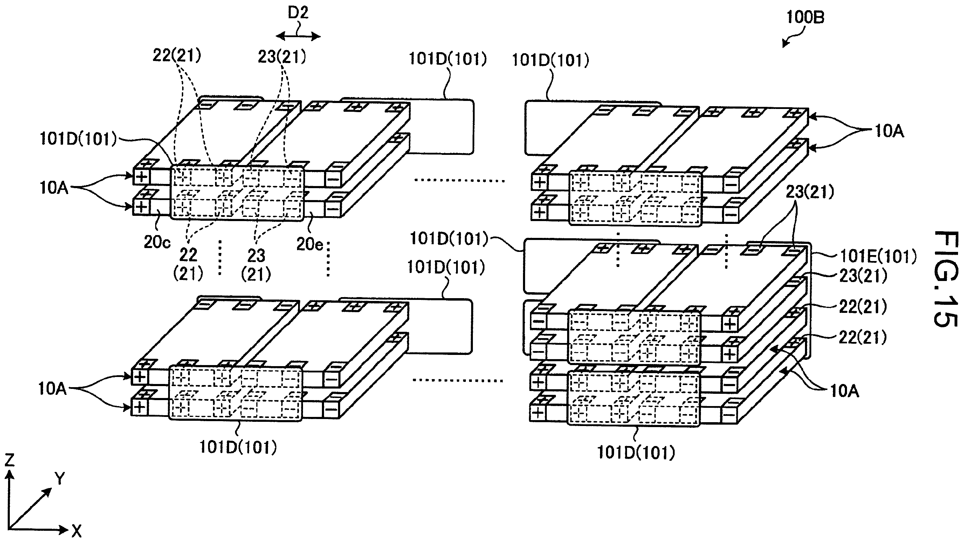

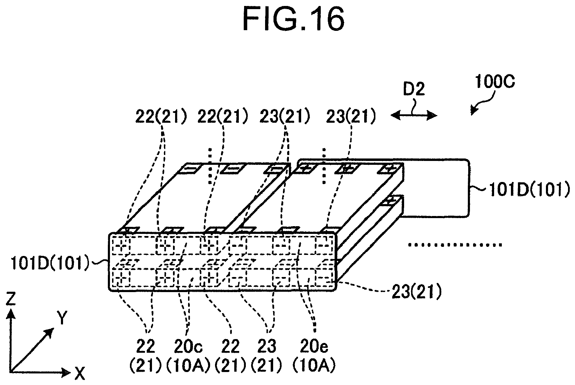

Next, assembled batteries 100B and 100C, each of which includes a plurality of battery cells 10A electrically connected to each other, are described with reference to Fig. 15 and Fig. 16.

As illustrated in Fig. 15, the assembled battery 100B includes a plurality of battery cells 10A and a plurality of conductive members 101 (conductive members 101D and 101E).

The plurality of battery cells 10A is arranged side by side in the X direction and in the Z direction in an orientation in which the lateral direction D2 is aligned to the X direction. The plurality of battery cells 10A is electrically connected to each other by the plurality of conductive members 101D and 101E. In the assembled battery 100B, the plurality of battery cells 10A is interconnected by the plurality of conductive members 101D and 101E in a combination of series and parallel connection.

Each of the conductive members 101D and 101E connects two positive-electrode terminals 22 or two negative-electrode terminals 23 of one of two adjacent battery cells 10A to two positive-electrode terminals 22 or two negative-electrode terminals 23 of the other of the two adjacent battery cells 10A.

For example, the conductive member 101D connects two positive-electrode terminals 22 of one of two battery cells 10A adjacent in the X direction to two negative-electrode terminals 23 of the other of the two battery cells 10A. Moreover, the conductive member 101D electrically connects two terminals 21 (positive-electrode terminals 22 or negative-electrode terminals 23) of one of two battery cells 10A adjacent in the Z direction to two terminals 21 (positive-electrode terminals 22 or negative-electrode terminals 23) of the other of the two battery cells 10A. In other words, the conductive member 101D electrically interconnects two terminals 21 of the same electrode polarity of the two battery cell 10A adjacent in the Z direction.

Furthermore, the conductive member 101E electrically interconnects a plurality of terminals 21 of four battery cells 10A arranged side by side in the Z direction. For example, the conductive member 101E electrically connects two positive-electrode terminals 22 of each of two battery cells 10A of the four battery cells 10A to two negative-electrode terminals 23 of each of the remaining two battery cells 10A of the four battery cells 10A.

As described above, in the assembled battery 100B, with respect to one battery cell 10A, each of the conductive members 101D and 101E is connected to two terminals 21 (positive-electrode terminals 22 or negative-electrode terminals 23) of three terminals 21 of the same electrode polarity of the battery cell 10A.

On the other hand, in an assembled battery 100C illustrated in Fig. 16, with respect to one battery cell 10A, each of the conductive members 101D and 101E is connected to three terminals 21 (positive-electrode terminals 22/negative-electrode terminals 23) of the same electrode polarity of the battery cell 10A. In Fig. 16, the conductive member 101E is omitted from depiction for sake of explanatory clarity. However, the assembled battery 100C is similar to the assembled battery 100B in configuration other than as mentioned above regarding coverage of two versus three terminals 21 on each battery cell 10A by the conductive members 101D and 101E.

The battery cell 10A in the second embodiment provides a large degree of freedom in installation orientation and a large degree of freedom of connection configuration between battery cells 10A.

Furthermore, in the second embodiment, the conductive members 101 connect to two or more positive-electrode terminals 22 or two or more negative-electrode terminals 23. Therefore, according to the second embodiment, for example, the amount of current flowing between battery cells 10A can be increased.

### <Third Embodiment>

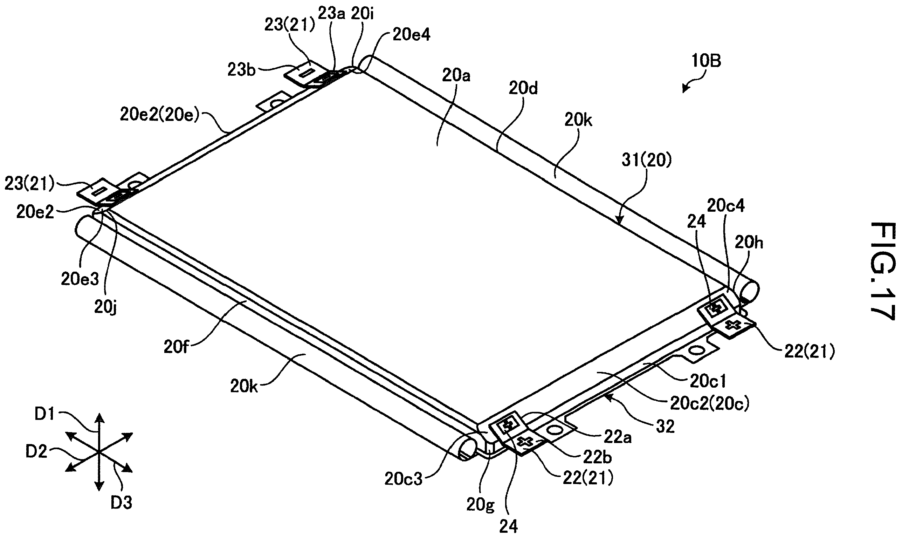

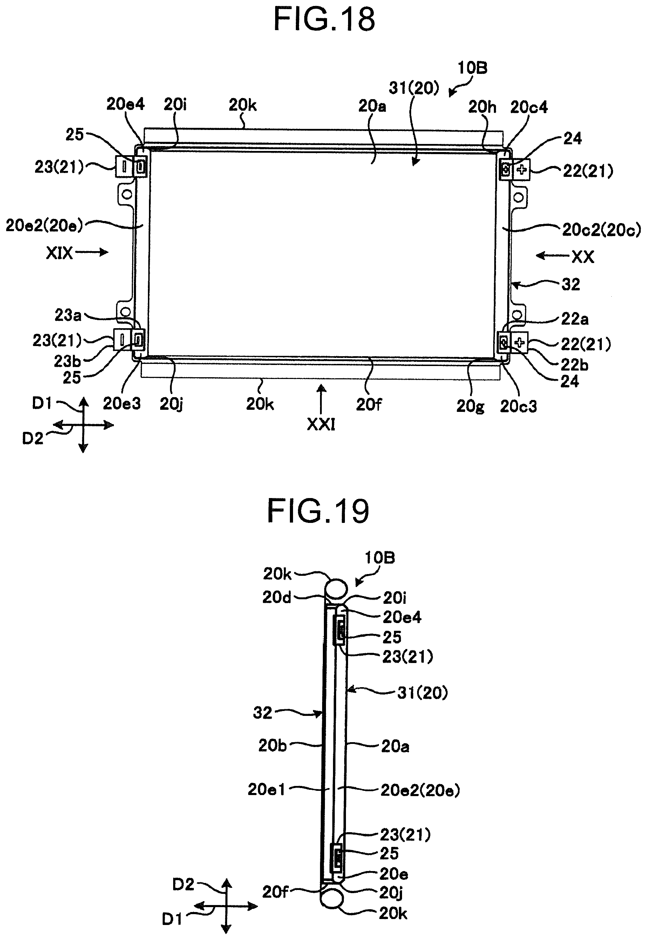

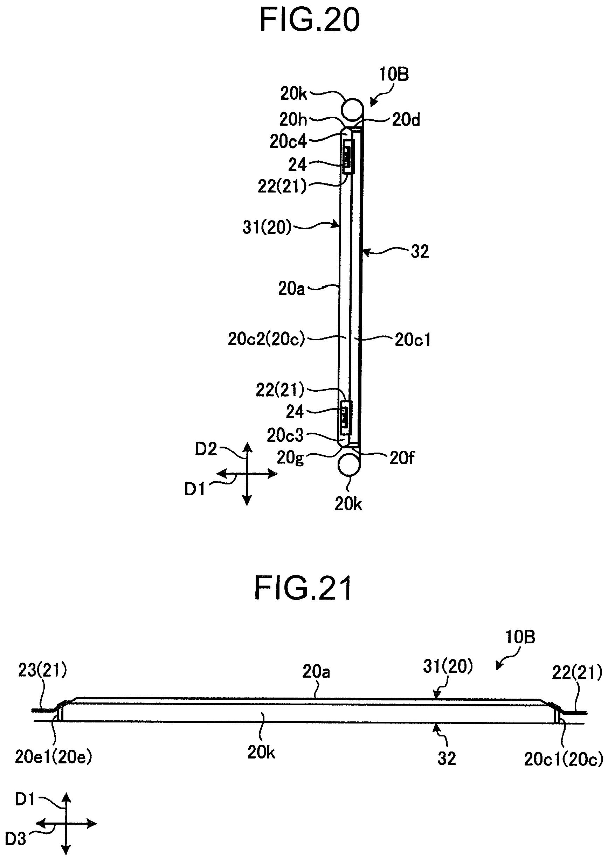

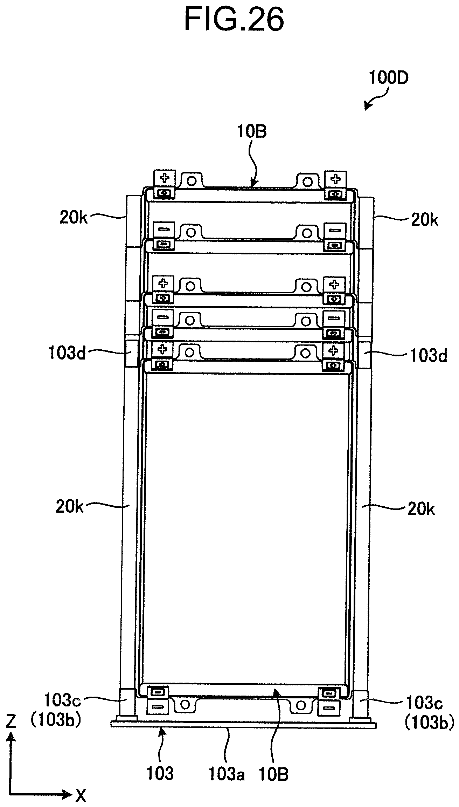

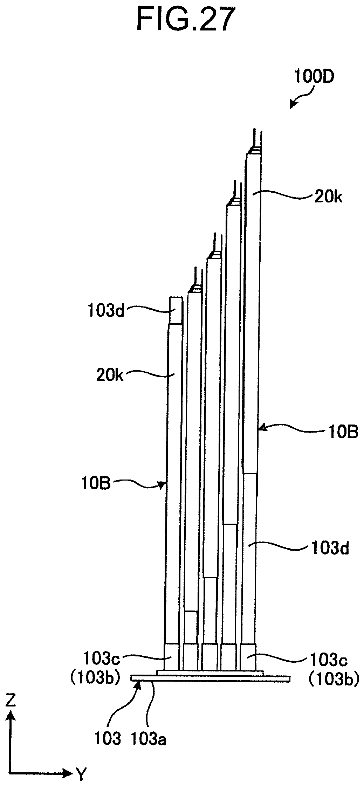

Next, a third embodiment is described with reference to Fig. 17 to Fig. 28. A battery cell 10B and an assembled battery 100D in the third embodiment have similar configurations to those of the battery cell 10 and assembled battery 100 in the above-described first embodiment. Therefore, the third embodiment can also acquire similar advantageous effects similar to those of the above-described first embodiment.

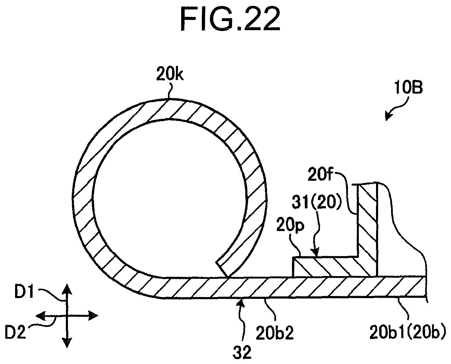

However, in the third embodiment, as illustrated in Fig. 17 to Fig. 21, a chassis 20 of the battery cell 10B is provided with two insertion receiving portions 20k. The insertion receiving portions 20k are provided at both end portions in the lateral direction D2 of the chassis 20. The insertion receiving portion 20k is configured in a tubular form extending in the longitudinal direction D3 of the chassis 20. The two insertion receiving portions 20k are located at the respective outsides of the wall portions 20d and 20f and thus respectively face the wall portions 20d and 20f. As illustrated in Fig. 22, the insertion receiving portion 20k is connected to the flange portion 20b2 of the wall portion 20b. The insertion receiving portion 20k is formed by, for example, folding back a plate-material end portion including the wall portion 20b in a circular pattern. Thus, the insertion receiving portion 20k is formed integrally with the wall portion 20b. Alternatively, the insertion receiving portion 20k can be joined to the wall portion 20b by, for example, welding. The insertion receiving portion 20k can also be referred to as an "attaching portion" in some instances. Furthermore, in the example illustrated in Fig. 17, the number or location of terminals 21 of the battery cell 10B is the same as that of the battery cell 10 (first embodiment), but the present disclosure is not limited to this. For example, the number or location of terminals 21 of the battery cell 10B can be similar to that of terminals 21 of the battery cell 10A (second embodiment).

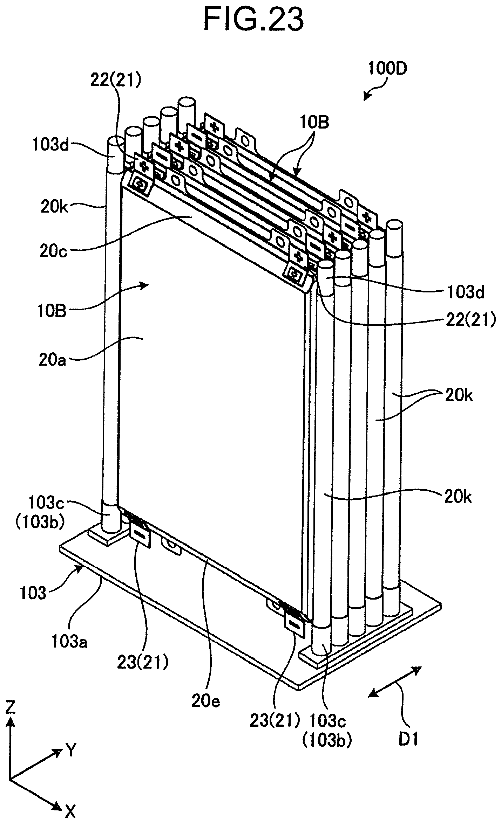

Next, an assembled battery 100D which includes a plurality of battery cells 10B electrically connected to each other is described with reference to Fig. 23 to Fig. 28.

As illustrated in Fig. 23, the assembled battery 100D includes a plurality of battery cells 10B and a supporting member 103. The plurality of battery cells 10B is interconnected in series by conductive members 101 (not specifically illustrated in Fig. 23, however see e.g. Fig. 9) in a state of being stacked on top of each other in the thickness direction D1. The plurality of battery cells 10B is supported by the supporting member 103. Furthermore, the plurality of battery cells 10B can be connected in parallel, or can be connected in a combination of series and parallel connection.

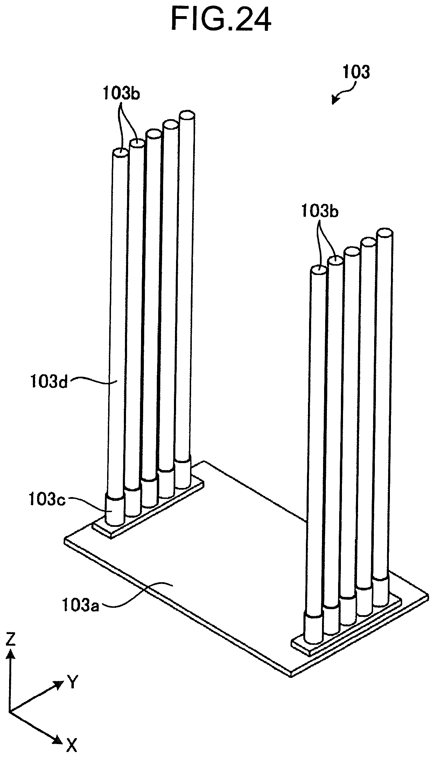

As illustrated in Fig. 24, the supporting member 103 includes a base portion 103a and a plurality of supporting portions 103b. The base portion 103a is configured, for example, in a plate-like shape. The plurality of supporting portions 103b is arranged in two rows. The supporting portion 103b is configured in a rod-like shape and is connected to the base portion 103a. The supporting portion 103b includes a column-shaped insertion portion 103d and an abutting portion 103c. The insertion portion 103d is inserted into the insertion receiving portion 20k of the battery cell 10B. The abutting portion 103c is configured to have a diameter larger than that of the insertion portion 103d and is connected to an end portion of the insertion portion 103d closer to the base portion 103a.

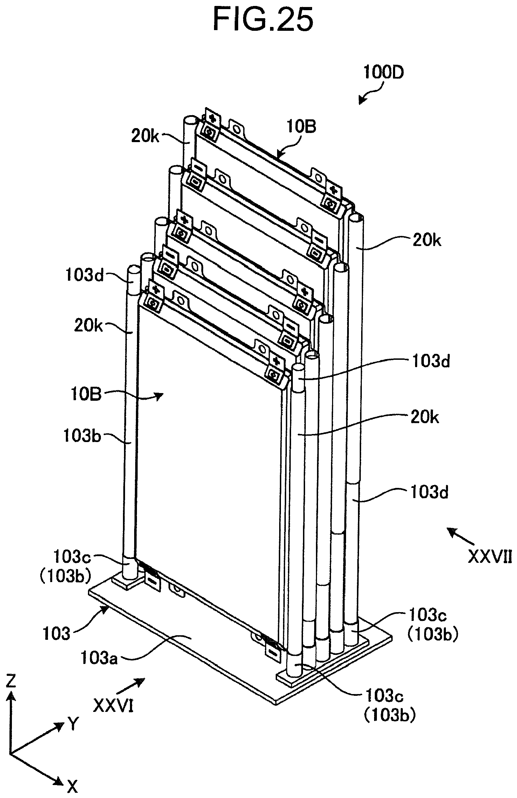

As illustrated in Fig. 23, the chassis 20 of each battery cell 10B is supported by the supporting portion 103b with the insertion portion 103d inserted into the insertion receiving portion 20k. More specifically, the insertion portion 103d supports the insertion receiving portion 20k at the outer periphery of the insertion portion 103d, and the abutting portion 103c supports one end portion of the insertion receiving portion 20k. Fig. 25 to Fig. 27 illustrate a process of mounting the battery cell 10B to the supporting member 103. As is understandable from Fig. 25 to Fig. 27, for example, in each of the plurality of battery cells 10B, the insertion receiving portion 20k is moved relative to the insertion portion 103d from the side opposite to the abutting portion 103c of the insertion portion 103d, so that the insertion portion 103d is inserted into the insertion receiving portion 20k.

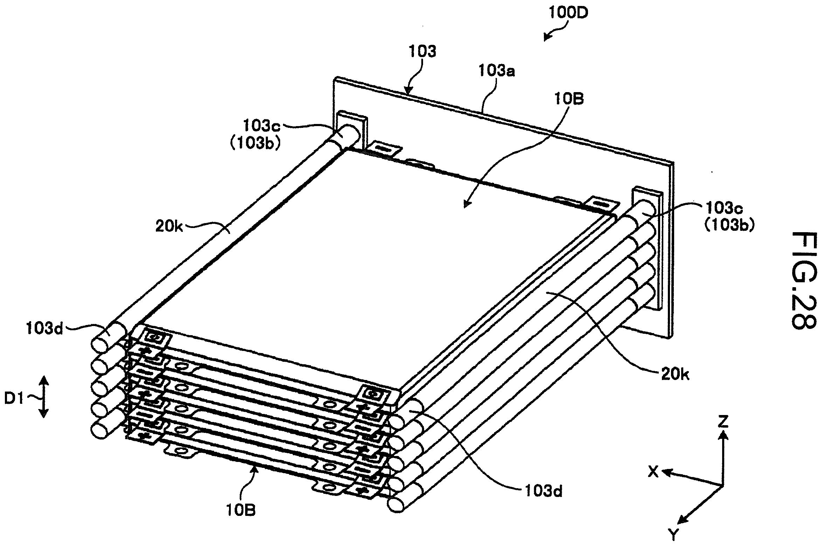

The assembled battery 100D configured as described above can be installed in various orientations. For example, as illustrated in Fig. 23, the assembled battery 100D can be installed in an orientation in which the supporting portion 103b extends from the base portion 103a along the Z direction. Furthermore, as illustrated in Fig. 28, the assembled battery 100D can be installed in an orientation in which the supporting portion 103b extends from the base portion 103a along the Y direction.

As described above, in the third embodiment, the chassis 20 of the battery cell 10B is provided with one of the insertion portion 103d and the insertion receiving portion 20k, into which the insertion portion 103d is inserted, and the chassis 20 is supported by the insertion portion 103d or the insertion receiving portion 20k. Therefore, according to the third embodiment, for example, it is possible to install the battery cell 10B.

Furthermore, an example in which the battery cell 10B has been provided with the insertion receiving portion 20k and the supporting member 103 is provided with the insertion portion 103d has been illustrated in this example; however, the present disclosure is not limited to this. The battery cell 10B can be provided with an insertion portion and the supporting member 103 can be provided with an insertion receiving portion. In such a case, for example, a space between the insertion portion of the battery cell 10B and the flange portion 20b2 can be provided with a slit through which a part of the insertion receiving portion enters, or the insertion receiving portion of the supporting member 103 can be provided with a slit through which the flange portion 20b2 of the battery cell 10B enters.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. The inventions can be implemented by other than the specific configuration examples, and still provide various advantageous effects (also including derivative effects) attained by the basic example configurations. Moreover, the details disclosed in the examples, such as structure, type, direction, shape, size, length, width, thickness, height, number, location, position, and material of various constituent elements can be altered or modified as appropriate in actual implementations.

## Claims

1. A battery cell, comprising:
a chassis having a first end side and a second end side;
a first electrode terminal exposed on the first end side of the chassis;
a second electrode terminal exposed on the second end side of the chassis; and
a third electrode terminal exposed on the first end side, wherein the first electrode terminal and the third electrode terminal have a same polarity and the first electrode terminal and the second electrode terminal have an opposite polarity.

2. The battery cell according to claim 1, further comprising:
a fourth electrode terminal exposed on the second end side of the chassis, wherein the fourth electrode terminal and the second electrode terminal have a same polarity.

3. The battery cell according to claim 1, wherein the chassis has a generally rectangular cuboid shape.

4. The battery cell according to claim 1, wherein the chassis includes:
a first wall portion on the first end side of the chassis and extending in a first direction, and
a second wall portion on the second end side of the chassis and extending in the first direction and spaced from the first wall portion in a second direction intersection the first direction, wherein
the first electrode terminal is on the first wall portion, and
the second electrode terminal is on the second wall portion.

5. The battery cell according to claim 4, further comprising:
a fourth electrode terminal exposed on the second end side of the chassis, wherein the fourth electrode terminal and the second electrode terminal have a same polarity

6. The battery cell according to claim 5, wherein the third electrode terminal is on the first wall portion and spaced from first electrode terminal along the first wall portion in the first direction, and
the fourth electrode terminal on at the second wall portion and spaced from the second electrode terminal along the second wall portion in the first direction.

7. The battery cell according to claim 1, wherein the first electrode terminal and the second electrode terminal are mounted on an outer surface of the chassis and extend beyond the outer surface of the chassis.

8. The battery cell according to claim 1, wherein first electrode terminal and the second electrode terminal are mounted flush with an outer surface of the chassis and do not extend beyond the outer surface of the chassis.

9. The battery cell according to claim 1, further comprising:
a fourth electrode terminal exposed on the second end side of the chassis, wherein the fourth electrode terminal and the second electrode terminal have a same polarity;
a fifth electrode terminal exposed on the first end side of the chassis, wherein the fifth electrode terminal and the first electrode terminal have a same polarity, the fifth electrode being between the first and third electrodes; and
a sixth electrode terminal exposed on the second end side of the chassis, wherein the sixth electrode terminal and the second electrode terminal have a same polarity, the sixth electrode being between the second and fourth electrodes.

10. The battery cell according claim 1, wherein the chassis includes:
an extended inserting portion on one of the first end side and the second end side, and
an insertion receiving portion on the other one of the first end side and the second end side, the insertion receiving portion being configured to receive and engage a corresponding extending inserting portion on another battery cell.

11. An assembled battery, comprising:
a plurality of battery cells corresponding to a battery cell according to claim 1, the plurality including at least a pair of adjacent battery cells; and
a conductive member connecting opposite polarity electrode terminals on at least the pair of adjacent battery cells.

12. An assembled battery, comprising:
a plurality of battery cells corresponding to a battery cell according to claim 8, the plurality including at least a pair of adjacent battery cells; and
a conductive member connecting electrode terminals having a same polarity on at least the pair of adjacent battery cells, wherein
the pair of adjacent battery cells are stacked on each other.

13. An assembled battery, comprising:
a plurality of battery cells corresponding to a battery cell according to claim 1, the plurality of battery cells being arranged side by side in two columns, the two columns extending along a first direction, the two columns being spaced from each other in a second direction, battery cells within each column being orientated such that adjacent battery cells within each column have electrode terminals of opposite polarity facing the other column; and
a conductive member connecting opposite polarity electrode terminals on a pair of adjacent battery cells in a column.

14. The assembled battery of claim 13, wherein the conductive member further connects the opposite polarity electrode terminals on the pair adjacent battery cells in the column to a pair of adjacent battery cells in the other column.

15. A battery cell, comprising:
a chassis having a generally rectangular cuboid shape;
a first positive-electrode terminal on a first end side of the chassis;
a second positive-electrode terminal on the first end side of the chassis and spaced from the first positive-electrode terminal in a first direction, the first and second positive-electrode terminals being electrically connected to each other;
a first negative-electrode terminal on a second end side of the chassis opposite the first end side in a second direction intersecting the first direction; and
a second negative-electrode terminal on the second end side of the chassis and spaced from the first negative-electrode terminal in the first direction, the first and second negative-electrode terminals being electrically connected to each other.

16. The battery cell according to claim 15, wherein
the first and second positive-electrode terminals are welded to a first end side outer wall of the chassis, and
the first and second negative-electrode terminals are welded to a second end side outer wall of the chassis.

17. The battery cell according to claim 15, wherein the chassis is symmetric about an axis parallel to the first direction.

18. The battery cell according to claim 15, wherein the chassis is symmetric about an axis parallel to the second direction.

19. The battery cell according to claim 15, wherein
the first and second positive-electrode terminals are flush with a first end side outer wall of the chassis, and
the first and second negative-electrode terminals are flush with a second end side outer wall of the chassis.

20. The battery cell according to claim 15, wherein a tubular insertion portion is on at least one of the first end side and the second end side of the chassis, and the tubular insertion portion configured to accept rod-like insert.
